# EUROPÄISCHE PATENTANMELDUNG

(11) **EP 3 629 033 A1**
(43) Veröffentlichungstag der Anmeldung: **01.04.2020**
(21) Anmeldenummer: 19000422.6
(22) Anmeldetag: 19.09.2019
(51) Int. Cl.: G01P 13/00, G01J 1/42, G08B 13/193

(54) **LICHTERFASSUNGSEINHEIT ZUR LICHTERFASSUNG FÜR EINE KONSTANTLICHTREGELUNG FÜR ZUMINDEST EINEN PRÄSENZMELDER SOWIE PRÄSENZMELDER MIT ZUMINDEST EINER SOLCHEN LICHTERFASSUNGSEINHEIT**

(30) Priorität: 26.09.2018 EP 18000759; 14.10.2018 EP 18000974
(71) Anmelder: Brück, Friedrich, 51647 Gummersbach (DE)
(72) Erfinder: Brück, Friedrich, 51647 Gummersbach (DE)
(74) Vertreter: Rebbereh, Cornelia

(57) **Zusammenfassung**

Bei einer Lichterfassungseinheit (1) zur Lichterfassung für eine Konstantlichtregelung für zumindest einen Präsenzmelder (5), wobei die Lichterfassungseinheit (1) zumindest einen Lichtsensor (6) zum Messen der Umgebungshelligkeit, zumindest eine Linse (2) zum Bündeln von einfallenden Lichtstrahlen in Richtung des Lichtsensors (6) und zumindest einen feststehenden ersten Gehäuseteil (40,50) zum Anordnen des zumindest einen Lichtsensors (6) umfasst, ist die zumindest eine Linse (2) in einem zweiten Gehäuseteil (41) angeordnet und ist eine Einrichtung zum Verändern der Brennweite vorgesehen zum Anpassen der Lichterfassungseinrichtung (1) an deren Montagehöhe in einem Raum. Bei einem Präsenzmelder (5) mit zumindest einer solchen Lichterfassungseinheit (1) ist diese außenseitig an dem Gehäuse (50) des Präsenzmelders (5) anordbar oder angeordnet und der zumindest eine Lichtsensor (6) der Lichterfassungseinheit (1) mit dem Präsenzmelder (5) und/oder einem Bussystem signalverbindbar oder signalverbunden oder ist die Lichterfassungseinheit (1) in das Gehäuse (50) des Präsenzmelders (5) integriert, wobei der zumindest eine Lichtsensor (6) im Innern des Präsenzmelders (5) angeordnet oder anordnbar und mit dem Präsenzmelder (5) und/oder einem Bussystem signalverbindbar oder signalverbunden ist.

## Beschreibung

Die Erfindung betrifft eine Lichterfassungseinheit zur Lichterfassung für eine Konstantlichtregelung für zumindest einen Präsenzmelder, wobei die Lichterfassungseinheit zumindest einen Lichtsensor zum Messen der Umgebungshelligkeit, zumindest eine Linse zum Bündeln von einfallenden Lichtstrahlen in Richtung des Lichtsensors und zumindest einen feststehenden ersten Gehäuseteil zum Anordnen des zumindest einen Lichtsensors umfasst, sowie einen Präsenzmelder mit zumindest einer solchen Lichterfassungseinheit, wobei der Präsenzmelder mit einem zumindest einem Gehäuse versehen ist.

Als Melder sind Präsenz- und Bewegungsmelder im Stand der Technik in unterschiedlichsten Ausgestaltungen bekannt. Diese dienen dazu, bei Detektieren der Präsenz und/oder der Bewegung einer Person in einem Detektionsbereich ein Signal auszusenden, mittels dessen eine Raumbeleuchtung, also zumindest eine Lichtquelle, ein- bzw. ausgeschaltet wird. Bekannt ist es ferner, zumindest einen Infrarot-, Präsenz- oder Bewegungsmelder-Sensor zu verwenden, bei dem die Wärmestrahlung von Personen oder anderen Wärmequellen gemessen wird, die sich im Detektionsbereich bzw. Erfassungsbereich des Sensors bewegen oder aufhalten. Wird in einem überwachten Detektionsbereich nicht mehr die Anwesenheit einer Person festgestellt, kann ein entsprechendes Signal ausgegeben und die Lichtquelle der Raumbeleuchtung wieder ausgeschaltet werden. Ferner ist es bekannt, dass bei Bewegungs- und/oder Präsenzmeldern zum Beispiel mittels eines lichtabhängigen Widerstandes (LDR), einer Fotodiode oder eines Umgebungshelligkeitssensors die Umgebungshelligkeit gemessen wird. Der funktionelle Unterschied zwischen einem Bewegungsmelder und einem Präsenzmelder ist üblicherweise der, dass ein Melder in Form eines Bewegungsmelders die Dunkelheit in einem Raum erkennt und bei Detektieren einer Bewegung beispielsweise die Raumbeleuchtung bzw. zumindest eine Lichtquelle einschaltet. Im Unterschied dazu schaltet ein Präsenzmelder bei Erreichen einer vorgegebenen Helligkeitsschwelle in dem überwachten Raum das Kunstlicht, das von der im Raum befindlichen Lichtquelle ausgesandt wird, wieder aus. Sinkt die Umgebungshelligkeit, die von dem Präsenzmelder erfasst wird, unter den Einschaltschwellwert, führt das Erkennen einer Bewegung zum Einschalten der Lichtquelle des Raumlichtes durch den Präsenzmelder. Somit wird eine unnötige Beleuchtung des Raumes durch Kunstlicht vermieden und Energie eingespart, da die zumindest eine im Raum befindliche Lichtquelle nur dann eingeschaltet bleibt, wenn dies erforderlich ist. Die Melder werden daher zur Beleuchtungssteuerung in und außerhalb von Gebäuden eingesetzt, um Energiesparpotentiale auszuschöpfen, da sie gezielt und bedarfsgerecht die Beleuchtung bzw. zumindest eine (Kunst-)Lichtquelle ein- und ausschalten.

Sowohl Präsenz- als auch Bewegungsmelder schalten Beleuchtung bzw. zumindest eine Lichtquelle automatisch in Abhängigkeit von anwesenden Personen bzw. deren Bewegung und der Umgebungshelligkeit im Bereich des Melders bzw. einer diesem zugeordneten Lichterfassungseinheit ein und aus. Beide Melderarten schalten zumindest eine Lichtquelle ein, wenn die Umgebungshelligkeit, die mittels eines in den Melder integrierten Lichtsensors gemessen wird, unterhalb einer einstellbaren Einschaltschwelle liegt und eine Bewegung erkannt wird. Ein Bewegungsmelder schaltet das Licht wieder aus, sobald während einer Nachlaufzeit keine Bewegung mehr erkannt wird, d.h. die zumindest eine Lichtquelle bleibt so lange eingeschaltet, wie Bewegungen detektiert werden (unabhängig vom durch den Melder an z.B. einer Raumdecke gemessenen Lichtwert bzw. Lichtstärkewert) zzgl. der eingestellten Nachlaufzeit. Es findet keine kontinuierliche Lichtmessung statt.

Bei Präsenzmeldern hingegen wird kontinuierlich die Umgebungshelligkeit gemessen. Präsenzmelder werden unterteilt in Schalt- und Regelmelder. Ein Schaltmelder schaltet im Unterschied zum Bewegungsmelder das Licht unabhängig von Bewegung aus, sobald die Umgebungshelligkeit eine Mindestzeit oberhalb der kalkulierten Ausschaltschwelle liegt. Präsenz-Regelmelder, hier kurz als Präsenzmelder bezeichnet, sind also Geräte, die es ermöglichen, dass zum Anteil an vorhandenem Tageslicht ein Anteil an Kunstlicht hinzugeregelt wird, welcher Anteil zum Erreichen einer in einem Raum gewünschten Helligkeit erforderlich ist. Ein solches Hinzuregeln eines Anteils an Kunstlicht zum Tageslicht, um einen gewünschten Helligkeitswert im Raum konstant zu halten, wird als Konstantlichtregelung bezeichnet. Eine Konstantlichtregelung ist mit analogen Systemen, wie z.B. im Bereich von 1 bis 10 V, und digitalen Systemen, beispielsweise über Bussysteme, wie KNX oder DALI, möglich, und bietet ein größeres Potential zur Energieeinsparung als das reine Ein- und Ausschalten einer Beleuchtung.

In der Regel ist ein Lichtsensor zum Messen der Umgebungshelligkeit in Lichteinfallsrichtung hinter der Linse eines Melders angeordnet, um das durch die Linse einfallende gebündelte Licht erfassen zu können. Eine solche Linse kann aus einem lichtdurchlässigen, nicht transparenten Kunststoff bestehen. Bei dieser Art der Lichtmessung wird das Licht, das im Raum vorhanden ist und zum Melder reflektiert wird, gemessen. Sie eignet sich besonders für Räume mit geringem Tageslichtanteil, da durch die Linse des Melders einfallende Lichtstrahlen diffus gebündelt werden und so mehr Licht am Lichtsensor ankommt.

Aus der DE 20 2006 020 311 U1 ist ein Präsenzmelder mit einem oder mehreren Helligkeitssensoren bekannt, bei dem, der oder die Helligkeitssensoren nicht hinter einer Fresnellinse, sondern im oder am die Fresnellinse umgebenden Gehäuseteil, z.B. einem umlaufenden Rand, des Melders angebracht sind. Somit ist der Lichtsensor zur Lichtmessung nicht hinter der Linse des Präsenzmelders angeordnet, sondern in einem die Fresnellinse umgebenden Gehäuseteil außen am Gehäuse des Präsenzmelders. Durch diese Anordnung wird eine eher punktuelle Lichtmessung ermöglicht, die sich insbesondere für Räume mit vergleichsweise viel Tageslicht eignet.

Aus der DE 295 03 531 U1 ist ein Bewegungsmelder mit einem Infrarotsensor zur Feststellung der Bewegung von Infrarotstrahlung aussendenden Körpern mit einer Linseneinrichtung zur Bündelung der aus einem einstellbaren Raumwinkel auf wenigstens einen Infrarotsensor eintreffenden Infrarotstrahlung, bekannt, bei dem die Linseneinrichtung eine drehbare Kuppel mit einer Anordnung von Einzellinsen aufweist, und die Einzellinsen in wenigstens zwei Sektoren der Kuppel unterschiedlich so angeordnet sind, dass durch Drehen der Kuppel unterschiedliche Raumwinkel und/oder Reichweiten einstellbar sind.

Bei den bekannten Arten der Lichtmessung wird eine Konstantlichtregelung jedoch nur bis zu einer Höhe von ca. 5 m ermöglicht. Ab dieser Höhe ist die Menge an Licht, die zum Lichtsensor reflektiert wird, nicht mehr ausreichend, um eine zuverlässige Konstantlichtregelung zu realisieren. Es ist jedoch beispielsweise in Hochregallagern, wo die Lichtmessung in einer Höhe von mehr als 5 m, zum Beispiel 14 m, stattfindet, wünschenswert, unter anderem aus Gründen der Sicherheit und der Energieeinsparung, einen konstanten Lichtstärkewert bzw. Lichtwert unter Berücksichtigung des vorhandenen Tageslichts zu halten.

Der vorliegenden Erfindung liegt daher die Aufgabe zugrunde, eine Lichterfassungseinheit zur Lichterfassung für eine Konstantlichtregelung für zumindest einen Präsenzmelder sowie einen mit einer solchen versehenen Präsenzmelder vorzusehen, wobei eine Konstantlichtregelung in Höhen von mehr als 5 m, insbesondere in Höhen von 12 bis 16 m, möglich ist, wie zum Beispiel bei der Verwendung in einem Hochregallager oder einer Lagerhalle.

Die Aufgabe wird für eine Lichterfassungseinheit zur Lichterfassung für eine Konstantlichtregelung nach dem Oberbegriff des Anspruchs 1 dadurch gelöst, dass die zumindest eine Linse in einem zweiten Gehäuseteil angeordnet ist und eine Einrichtung zum Verändern der Brennweite vorgesehen ist zum Anpassen der Lichterfassungseinrichtung an deren Montagehöhe in einem Raum. Für einen Präsenzmelder nach dem Oberbegriff des Anspruchs 8 wird die Aufgabe dadurch gelöst, dass die Lichterfassungseinheit außenseitig an dem Gehäuse des Präsenzmelders anordbar oder angeordnet ist und der zumindest eine Lichtsensor der Lichterfassungseinheit mit dem Präsenzmelder und/oder einem Bussystem signalverbindbar oder signalverbunden ist. Für einen Präsenzmelder nach dem Oberbegriff des Anspruchs 9 wird die Aufgabe dadurch gelöst, dass die Lichterfassungseinheit in das Gehäuse des Präsenzmelders integriert ist, wobei der zumindest eine Lichtsensor im Innern des Präsenzmelders angeordnet oder anordnbar und mit dem Präsenzmelder und/oder einem Bussystem signalverbindbar oder signalverbunden ist. Weiterbildungen der Erfindung sind in den abhängigen Ansprüchen definiert.

Dadurch wird eine Lichterfassungseinheit zur Lichterfassung für eine Konstantlichtregelung geschaffen, die durch die Möglichkeit eines Veränderns der Brennweite, also Veränderns des Abstands der Linse zum Lichtsensor, den Abstand von Linse und Lichtsensor so groß einstellen kann, dass auch in einer Montagehöhe von mehr als 5 m, beispielsweise 14 m, die auf den Lichtsensor auftreffende Lichtmenge die Realisierung einer zuverlässigen Konstantlichtregelung ermöglicht. Das von der Linse gebündelte Licht gelangt auch bei verändertem Abstand stets auf den im Fokus der Linse angeordneten Lichtsensor. Der zumindest eine Lichtsensor dient zur Messung der Umgebungshelligkeit und ist in einem feststehenden ersten Gehäuseteil der Lichterfassungseinrichtung angeordnet. Bei Integration der Lichterfassungseinrichtung in einen Präsenzmelder kann der zumindest eine Lichtsensor in dessen Gehäuse bzw. einem Gehäuseteil von diesem aufgenommen sein, so dass der erste Gehäuseteil das Gehäuse des Präsenzmelders ist. Die zumindest eine Linse ist in einen zweiten Gehäuseteil aufgenommen. Die Linse weist zum Sammeln und Bündeln von Licht vorteilhaft zumindest eine konvex gewölbte Seite auf, die in dem zweiten Gehäuseteil in Richtung weg von dem Lichtsensor gerichtet ist. Die einfach konvexe Linse kann z.B. aus einem transparenten Material bestehen. Durch Ändern des Abstandes zwischen Lichtsensor und Linse kann die Brennweite verändert und auf eine gewünschte Montagehöhe der Lichterfassungseinheit angepasst werden. ,

Der Lichtsensor kann als analoger oder als digitaler Lichtsensor ausgebildet sein. Hierdurch ist sowohl eine Verwendung für eine Kostantlichtregelung bei analogen Systemen, die mit 1 bis 10V-Technik arbeiten, als auch bei digitalen Systemen, wie Bussystemen, wie beispielsweise KNX oder DALI, möglich.

Die Einrichtung zum Verändern der Brennweite kann zumindest zwei beabstandete Auflageflächen für die Linse innerhalb des zweiten Gehäuseteils umfassen. Die zumindest zwei Auflageflächen sind in Längsrichtung des zweiten Gehäuseteils zueinander mit Abstand angeordnet, so dass durch Anordnen der Linse auf einer anderen Auflagefläche der Abstand der Linse zu dem Lichtsensor geändert werden kann und somit die Brennweite zum Anpassen der Lichterfassungseinrichtung an eine andere Montagehöhe von dieser in einem Raum, wie einer Lagerhalle oder im Bereich eines Hochregallagers oder an einem solchen. Die einzelnen Auflageflächen können innerhalb des zweiten Gehäuseteils, in dem die zumindest eine Linse angeordnet ist, vorgesehen sein. Ferner ist es möglich, Auflageflächen endseitig in dem ersten Gehäuseteil, mit Abstand zu dem zumindest einen Lichtsensor anzuordnen, wobei der zweite Gehäuseteil an diesen angreifen, sich insbesondere auf oder an diesen abstützen und/oder an diesen verrasten kann. Auch hierüber ist ein Verändern des Abstands der zumindest einen Linse zu dem zumindest einen Lichtsensor möglich, somit ein Verändern der Brennweite. Der zweite Gehäuseteil ist somit insbesondere gegenüber dem ersten bzw. feststehenden ersten Gehäuseteil bewegbar.

Weiter vorteilhaft kann die Einrichtung zum Verändern der Brennweite eine Teleskopeinrichtung sein, wodurch der Abstand der zumindest einen Linse gegenüber dem den zumindest einen Lichtsensor umfassenden ersten Gehäuseteil und somit dem zumindest einen Lichtsensor verstellbar ist. Die Teleskopeinrichtung kann einen die zumindest eine Linse aufnehmenden Teil umfassen, der endseitig mit zumindest einer Rasteinrichtung bzw. zumindest einem auskragenden Element versehen ist. Der erste Gehäuseteil kann mit zumindest zwei in seiner Längsrichtung beabstandeten Rastaufnahmen versehen sein, wobei die zumindest eine Rasteinrichtung bzw. das zumindest eine auskragende Element in den Rastaufnahmen verrastbar ist. Der die zumindest eine Linse aufnehmende Teil kann der zweite Gehäuseteil sein, der endseitig mit der zumindest einen Rasteinrichtung versehen ist, die rastend in die zumindest eine Rastaufnahme an dem zweiten Gehäuseteil eingreifen kann. Hierdurch ist ein Verrasten der Rasteinrichtung(en) an dem ersten Gehäuseteil in unterschiedlichen Positionen und somit Höhen an dem ersten Gehäuseteil bzw. dessen Rastaufnahmen möglich und somit ein Verändern der Position der zumindest einen Linse am zweiten Gehäuseteil gegenüber der Position des zumindest einen Lichtsensors am ersten Gehäuseteil. Der die Rasteinrichtung(en) umfassende und die zumindest eine Linse aufnehmende Teil kann zusätzlich zu dem zweiten Gehäuseteil vorgesehen werden oder der zweite Gehäuseteil kann dieser Teil sein. Der zweite Gehäuseteil oder der die zumindest eine Linse aufnehmende Teil kann zumindest teilweise hülsenartig oder teilhüsenartig und/oder z.B. in Form von Segmenten, Stäben bzw. Teleskopstäben ausgebildet sein. Insbesondere ist es möglich, einen zumindest teilweise hülsenartigen oder teilhüsenartigen und/oder in Form von Stäben bzw. Teleskopstäben ausgebildeten Teil sowie einen quer, also etwa senkrecht, zu diesem oder diesen angeordneten Teil vorzusehen, wobei die zumindest eine Linse in oder an dem quer angeordneten Teil angeordnet ist/wird. Ferner kann die zumindest eine Linse auch direkt insbesondere endseitig an dem zweiten Gehäuseteil angeordnet sein oder werden.

Anstelle des Vorsehens zumindest einer Rasteinrichtung an dem zumindest einen die zumindest eine Linse aufnehmenden Teil, insbesondere zweiten Gehäuseteil, und von Rastaufnahmen an dem ersten, den zumindest einen Lichtsensor aufnehmenden Gehäuseteil können umgekehrt Rastaufnahmen auch an dem zumindest einen die zumindest eine Linse aufnehmenden Teil, insbesondere zweiten Gehäuseteil, und zumindest eine Rasteinrichtung an dem ersten, den zumindest einen Lichtsensor aufnehmenden Gehäuseteil vorgesehen sein.

Die Teleskopeinrichtung kann zumindest eine Einstelleinrichtung zum stufenlosen Einstellen des Abstands der zumindest einen Linse gegenüber dem zumindest einen Lichtsensor aufweisen. Hierdurch ist, im Unterschied zu dem gestuften Verstellen des Abstands zwischen der zumindest einen Linseund dem zumindest einen Lichtsensor durch Vorsehen von Rasteinrichtungen und Rastaufnahmen ein stufenloses Verstellen möglich, somit ein optimales Einstellen der Brennweite zur optimalen Anpassung der Lichterfassungseinrichtung an deren Montagehöhe in einem hohen Raum, wie einer Lagerhalle oder einem Hochregallager. Ein im Wesentlichen stufenloses Einstellen des Abstands ist beispielsweise dann möglich, wenn die Einrichtung zum Verändern der Brennweite eine Schraubverbindung zwischen dem die zumindest eine Linse umfassenden zweiten Gehäuseteils und dem ersten Gehäuseteils umfasst. Ferner kann auch die zumindest eine Linse in dem ersten oder zweiten Gehäuseteil über eine Schraubverbindung mit dem jeweiligen Gehäuseteil verbunden und gegenüber diesem in ihrer Position veränderbar sein.

Der erste Gehäuseteil kann vorteilhaft mit zumindest einer Einrichtung zum Verbinden der Lichterfassungseinheit mit einem Präsenzmelder versehen sein. Hierdurch ist es möglich, die Lichterfassungseinrichtung außenseitg an einem Präsenzmelder bzw. dessen Gehäuse anzubringen und mit diesem zu verbinden. Die Einrichtung zum Verbinden kann in Form eines von dem ersten, den zumindest einen Lichtsensor umfassenden Gehäuseteil abgewinkelten Auslegers ausgebildet sein, der insbesondere im Innern hohl ausgebildet ist, um eine Signalleitung von dem zumindest einen Lichtsensor zu einer Auswertungseinheit im Innern des Präsenzmelders und/oder zu einem Bussystem, wie einem DALI-oder KNX-Bus, und über dieses zu einer Auswertungseinheit zu führen. Zumindest eine Auswertungseinheit kann zum Auswerten der von dem zumindest einen Lichtsensor der Lichterfassungseinheit erfassten Daten vorgesehen sein, wobei der zumindest eine Lichtsensor mit der Auswertungseinheit signalverbindbar oder signalverbunden ist. Die zumindest eine Auswertungseinheit kann innerhalb des Präsenzmelders angeordnet sein. Ebenfalls ist es möglich, die zumindest eine Auswertungseinheit entfernt anzuordnen und über zumindest ein Bussystem mit dem Präsenzmelder und/oder dem zumindest einen Lichtsensor der Lichterfassungseinheit signalzuverbinden. Unter Verwendung der Auswertungseinheit bzw. der von der Auswertungseinheit ausgewerteten Daten kann eine Konstantlichtregelung erfolgen.

Bei Anordnen des zumindest einen Lichtsensors im Innern des Präsenzmelders kann der zumindest eine Lichtsensor vorteilhaft auf einer Platine des Präsenzmelders angeordnet sein. Hierdurch wird der Lichtsensor platzsparend integriert. Die Linse der Lichterfassungseinheit kann vorteilhaft außerhalb einer einen Bewegungssensor, insbesondere einen PIR-Sensor, überdeckenden Linse bzw. Linseneinheit angeordnet sein. Eine solche Linse oder Linseneinheit weist zumeist eine wabenartige Struktur auf und besteht aus einem transparenten, lichtdurchlässigen, diffusen Material, so dass sie ungeeignet für die Erfassung von Helligkeitswerten erscheint. Daher erweist es sich als vorteilhaft, die Linse zum Bündeln von Licht in Richtung des Lichtsensors nicht unterhalb der Linse, die den zumindest einen Bewegungssensor überdeckt, anzuordnen.

Innerhalb des Gehäuses des Präsenzmelders kann ferner zumindest eine Rastaufnahme zum Zusammenwirken mit der zumindest einem auskragenden Element zum Verrasten der Position der zumindest einen Linse der Lichterfassungseinheit gegenüber dem zumindest einen innerhalb des Gehäuses des Präsenzmelders angeordneten Lichtsensor der Lichterfassungseinheit vorgesehen sein. Der zweite, die zumindest eine Linse aufnehmende Gehäuseteil oder der die zumindest eine Linse aufnehmende Teil kann somit in dem Gehäuse des Präsenzmelders über z.B. zumindest eine Rasteinrichtung, Schraubverbindung oder eine anderweitige, eine stufenlose oder gestufte Verstellung der Position der zumindest einen Linse gegenüber dem zumindest einen im Innern des Gehäuses des Präsenzmelders, insbesondere auf dessen Platine, aufgenommenen Lichtsensor ermöglichende Einrichtung bzw. Teleskopeinrichtung verstellbar aufgenommen sein.

Weiter vorteilhaft kann zumindest eine Führungseinrichtung vorgesehen sein zum Führen der Bewegung des die zumindest eine Linse umfassenden zweiten Gehäuseteils der Lichterfassungseinheit beim Verändern des Abstands der zumindest einen Linse gegenüber dem zumindest einen Lichtsensor.

Zur näheren Erläuterung der Erfindung werden im Folgenden Ausführungsbeispiele von dieser näher anhand der Zeichnungen beschrieben. Diese zeigen in:
- Figur 1: eine schematische Längsschnittansicht einer ersten Ausführungsform einer erfindungsgemäßen Lichterfassungseinheit,
- Figur 2: eine schematische Längsschnittansicht einer zweiten Ausführungsform der erfindungsgemäßen Lichterfassungseinheit,
- Figur 3: eine Seitenansicht einer erfindungsgemäßen Lichterfassungseinheit, die außenseitig an einem Präsenzmelder angeordnet ist,
- Figur 4: eine perspektivische Ansicht des Präsenzmelders mit Lichterfassungseinheit gemäß Figur 3,
- Figur 5: eine Längsschnittansicht einer weiteren Ausführungsform einer erfindungsgemäßen höhenverstellbaren Lichterfassungseinheit in zwei Positionen,
- Figur 6: eine perspektivische Ansicht eines erfindungsgemäßen Präsenzmelders mit integrierter Lichterfassungseinheit,
- Figur 7: eine Seitenansicht des Präsenzmelders gemäß Figur 6,
- Figur 8: eine weitere Seitenansicht des Präsenzmelders gemäß Figur 6, und
- Figur 9: eine schematische Ansicht eines erfindungsgemäßen Präsenzmelders mit einerseits außenseitiger Anordnung einer erfindungsgemäßen Lichterfassungseinheit (rechts angedeutet) und andererseits einer in diesen integrierten Anordnung einer erfindungsgemäßen Lichterfassungseinheit (links angedeutet) sowie im linken Teil der Figur eine schematische Ansicht eines hohen Raums, wie eines Hochregallagers, mit Anordnung des erfindungsgemäßen Präsenzmelders an der Raumdecke.

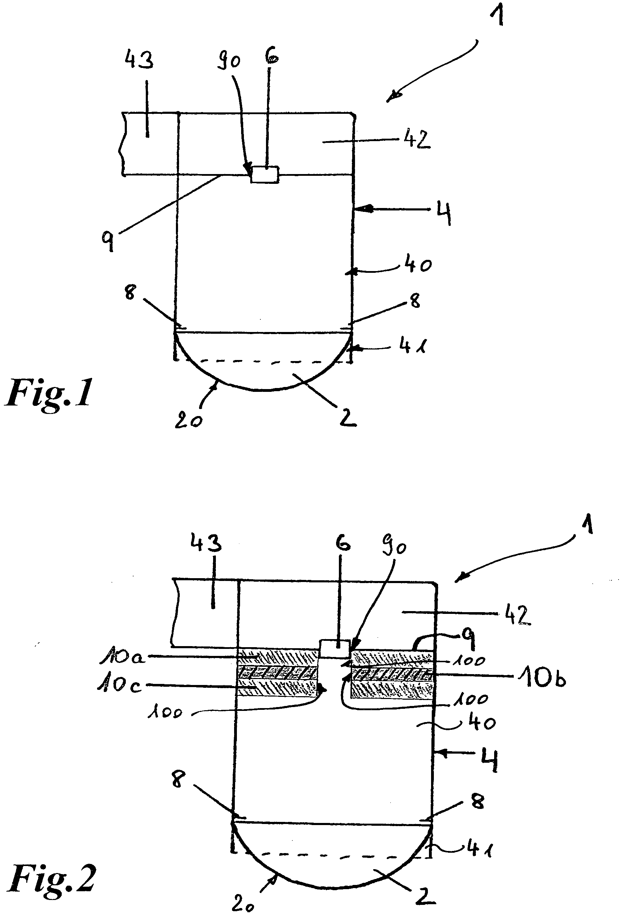

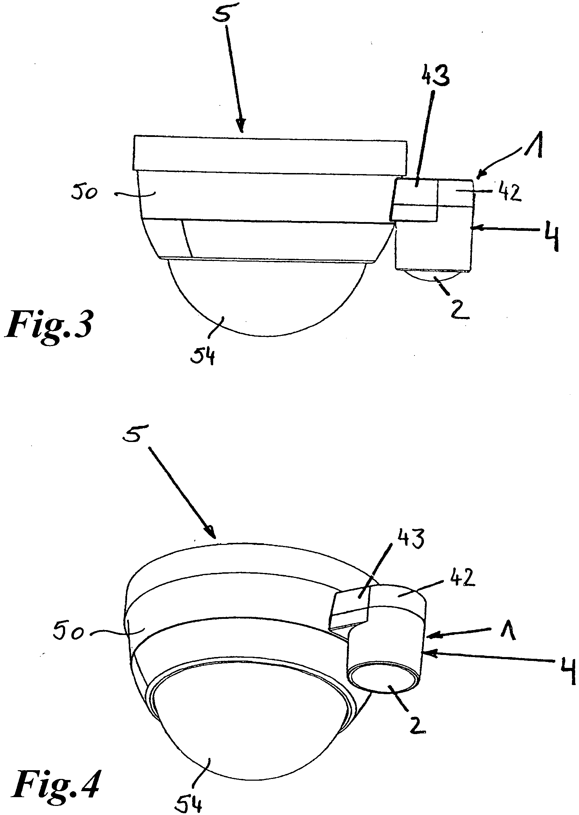

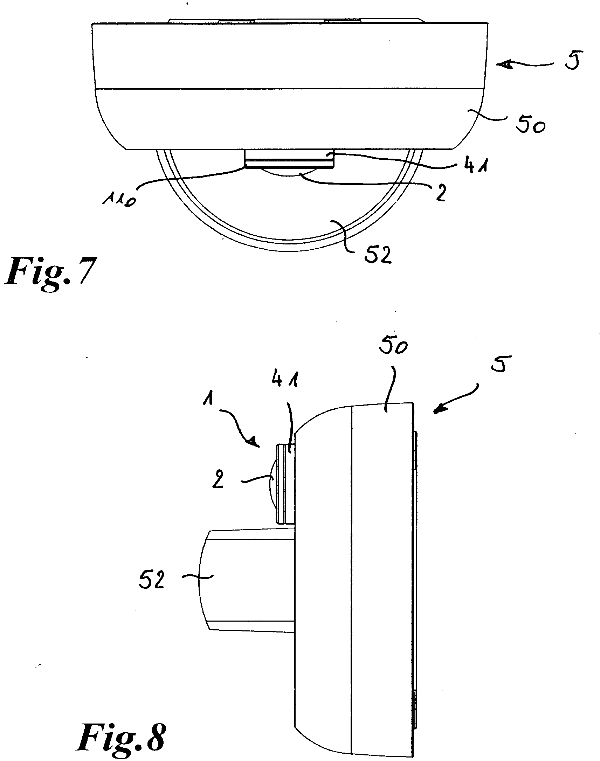

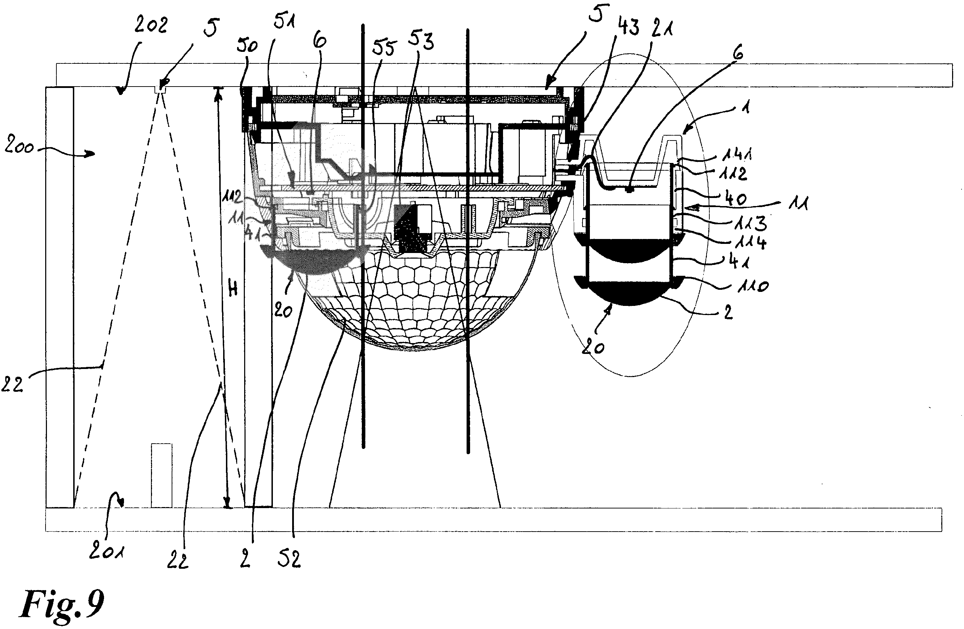

Figur 1 zeigt eine Lichterfassungseinheit 1 zur Lichterfassung für eine Konstantlichtregelung für einen Präsenzmelder 5, der in den Figuren 3, 4, 6, 7, 8, 9 zu sehen ist. Die Lichterfassungseinheit 1 umfasst ein Gehäuse 4, eine Linse 2 sowie einen Lichtsensor 6. Der Lichtsensor 6 dient dem Messen der Umgebungshelligkeit und kann als analoger oder digitaler Lichtsensor ausgebildet sein, um sowohl mit einer 1 bis 10 V-Technik (bei analoger Ausbildung) als auch mit Bussystemen, wie beispielsweise KNX- oder DALI-Bus (bei digitaler Ausbildung), verwendet werden zu können. Er ist im Innern eines ersten Gehäuseteils 40 angeordnet, die Linse 2 in einem zweiten Gehäuseteil 41. Die Linse 2 ist in der in den Figuren 1, 2, 5 und 9 gezeigten Ausführungsform einfach konvex geformt, kann jedoch auch eine andere Formgebung aufweisen. Der konvexe Teil 20 der Linse 2 ist in Richtung eines Raums 200 (siehe Figur 9) gerichtet, also weg von dem Lichtsensor 6. Die Linse 2 bündelt einfallendes Licht bzw. Lichtstrahlen, welches/welche auf den Lichtsensor 6 fokussiert wird/werden. Sie besteht insbesondere aus einem transparenten Material mit guten optischen Eigenschaften, d.h. mit einer geringen Lichtdämpfung und einem geringen optischen Widerstand.

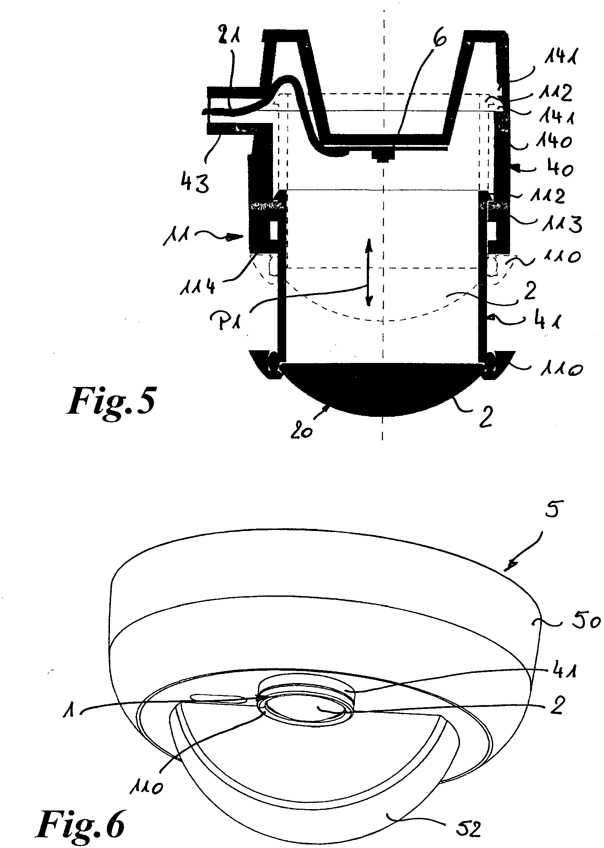

Die Lichterfassungseinheit 1 kann, wie in den Figuren 3, 4 und teilweise in Figur 9 gezeigt, mit einem Präsenzmelder 5 fest verbunden außerhalb des Präsenzmelders 5 angeordnet sein oder in dessen Gehäuse 50 integriert auf dessen Platine 51 angeordnet sein, wie den Figuren 6 bis 9 zu entnehmen ist. In beiden Varianten kann eine Auswertungseinheit des Präsenzmelders 5 zum Auswerten der erhaltenen Lichtdaten zur Umgebungshelligkeitsmessung dienen. Es ist jedoch ebenfalls möglich, dass die Lichterfassungseinheit 1 die gemessenen Lichtstärkewerte oder Lichtwerte über ein Bussystem bzw. einen Bus, wie einen KNX-Bus oder einen DALI-Bus, an eine entfernt gelegene Auswertungseinheit (nicht dargestellt) übermittelt. Eine Auswertungseinheit zur Auswertung der gemessenen Lichtwerte bzw. Lichtdaten kann somit sowohl proximal, zum Beispiel im Präsenzmelder 5, als auch distal, zum Beispiel in Form einer an einem Bussystem angeschlossenen Auswertungseinheit, angeordnet sein, wobei letztere Auswertungseinheit über das Bussystem bzw. den Bus mit dem Präsenzmelder 5 und/oder dem Lichtsensor 6 der Lichterfassungseinheit 1 signalverbunden sein bzw. werden kann.

Wie in der Ausführungsform nach Figur 1, 2 gezeigt, ist innerhalb des ersten Gehäuseteils 40 ein Zwischenboden 9 angeordnet, der einen oberen Teil 42 und eine seitliche Verlängerung 43 von diesem von dem Rest des ersten Gehäuseteils 40 abtrennt. In einer Aussparung oder Durchgangsöffnung 90 des Zwischenbodens 9 oder an diesem ist der Lichtsensor 6 angeordnet, wie Figur 1 und 2 zu entnehmen ist. Der Lichtsensor 6 ist dabei im Fokus der Linse 2 angeordnet, somit der Abstand des Zwischenbodens 9 von der Linse 2 so gewählt, dass einfallende Lichtstrahlen durch die Linse 2 in Richtung des Lichtsensors 6 gebündelt werden.

Im zweiten Gehäuseteil 41 sind zwei oder mehr Auflageflächen 8 zum Auflagern der Linse 2 angeordnet. Wie insbesondere den Figuren 1 und 2 entnommen werden kann, überragt der zweite Gehäuseteil 41 die Linse 2 außenseitig, so dass die Linse 2 teilweise in den zweiten Gehäuseteil 41 aufgenommen ist.

Der zweite Gehäuseteil 41 und der erste Gehäuseteil 40 sind nicht miteinander feststehend verbunden, sondern zueinander beweglich, so dass der Abstand der Linse 2 von dem Lichtsensor 6 und somit auch die Gesamtlänge des Gehäuses 4 verändert werden kann. Hierdurch ist es möglich, die Brennweite (bezüglich Linse 2 und Lichtsensor 6) zu verändern zum Anpassen der Lichterfassungseinrichtung 1 an deren Montagehöhe in einem Raum. Somit kann durch Verändern des Abstands von Linse 2 im zweiten Gehäuseteil 41 und Lichtsensor 6 im ersten Gehäuseteil 40 eine Anpassung der Lichterfassungseinrichtung 1 an unterschiedliche Anordnungshöhen von dieser in einem Raum, beispielsweise in einem Hochregallager, vorgenommen werden.

Zum Verändern der Brennweite können zumindest zwei beabstandete Auflageflächen 8 für die Linse 2 innerhalb des zweiten Gehäuseteils 41 vorgesehen sein (in den Figuren nicht gezeigt). Ferner können der erste und der zweite Gehäuseteil 40, 41 mittels einer Schraubverbindung verbunden sein, wobei die Linse 2 im zweiten Gehäuseteil 41 angeordnet, insbesondere darin festgelegt bzw. mit dem zweiten Gehäuseteil 41 fest verbunden ist, und dieser über die Schraubverbindung mit dem ersten Gehäuseteil 40 verbunden und somit gegenüber diesem beweglich ist. Durch Drehen und somit Herausschrauben bzw. Hineinschrauben des zweiten Gehäuseteils 41 aus bzw. in den ersten Gehäuseteil 40 kann ebenfalls die Brennweite, also der Abstand zwischen Linse 2 und Lichtsensor 6 verändert werden.

Wie in Figur 5 gezeigt, kann ferner zum Verändern der Brennweite eine Teleskopeinrichtung 11 vorgesehen sein. Über diese kann der Abstand der Linse 2 gegenüber dem den Lichtsensor 6 umfassenden ersten Gehäuseteil 40 ebenfalls verändert werden. Die Teleskopeinrichtung 11 umfasst zwei gegeneinander verstellbare, somit teleskopierbare, Elemente, hier den ersten Gehäuseteil 40 und den zweiten Gehäuseteil 41, der in den ersten Gehäuseteil 40 eingreift und gegenüber diesen beweglich und somit verstellbar ist. Der erste Gehäuseteil 40 wird üblicherweise feststehend angeordnet, beispielsweise an dem Präsenzmelder 5 befestigt, während der zweite Gehäuseteil 41 beweglich angeordnet ist. Die Teleskopeinrichtung 11 kann, je nach Ausgestaltung des ersten und des zweiten Gehäuseteils z.B. nach Art von Teleskopstäben, Teleskophülsen, teleskopierbaren Segmenten etc. ausgebildet sein. Die Linse 2 ist in der Ausgestaltung nach Figur 5 über ein Ringelement 110, beispielsweise aus Silikon, an dem zweiten Gehäuseteil 41 der Teleskopeinrichtung 11 angeordnet. Durch das Ringelement 110 sind einerseits eine Abdichtung gegenüber dem Eindringen von Feuchtigkeit in den zweiten Gehäuseteil 41, andererseits eine Dämpfung und ein Ausgleich von Toleranzen möglich. Am gegenüberliegenden Ende weist der zweite Gehäuseteil 41 zumindest ein auskragendes Element112, hier hakenförmig auskragendes Element, auf. Das auskragende Element 112 kann als ein umlaufendes auskragendes Element ausgebildet sein oder als zumindest zwei auskragende Segmente, insbesondere mehrere über den Umfang angeordnete Segmente. Über das auskragende Element 112 hintergreift der zweite Gehäuseteil 41 in der vollständig ausgefahrenen Position in Figur 5 einen Vorsprung 113 des ersten Gehäuseteils 40. Der Vorsprung 113 dient dem Begrenzen der axialen Bewegung des zweiten Gehäuseteils 41 gegenüber dem ersten Gehäuseteil 40 durch Vorsehen eines solchen Endanschlags in Form des Vorsprungs 113. Der Vorsprung 113 kann in Form von einem oder mehreren vorspringenden Segmenten oder einem umlaufenden vorspringenden Rand ausgebildet sein. Eine radiale Führung des zweiten Gehäuseteils 41 gegenüber dem ersten Gehäuseteil 40 ist durch einen zweiten Vorsprung 114 vorgesehen, der beabstandet zu dem ersten Vorsprung 113 angeordnet ist und insbesondere mit diesem fluchtet, um eine parallele Führung für den zweiten Gehäuseteil 41 vorzusehen. Auch der zweite Vorsprung 114 kann als ein oder mehrere Segmente oder als umlaufender vorspringender Rand ausgebildet sein. Das auskragende Element 112 wird im Innern des ersten Gehäuseteils 40 entlang von dessen Wandung 140 geführt, so dass durch die Vorsprünge 113, 114 und die Innenseite der insbesondere umlaufenden Wandung 140 des ersten Gehäuseteils 40 eine verkipp- und verkantungsfreie Führung des zweiten Gehäuseteils 41 in dem ersten Gehäuseteil 40 möglich ist. Die Linse 2, die endseitig an dem zweiten Gehäuseteil 41 angeordnet ist, ist somit (höhen)verstellbar, also beweglich, angeordnet, was durch Pfeil P1 in Figur 5 angedeutet ist.

Um ein Verrasten des vorkragenden Elements 112 oder der vorkragenden Elemente in vorgegebenen Positionen und somit ein Einstellen der Linse 2 in unterschiedlichen Höhenpositionen zu ermöglichen, sind auf der Innenseite der Wandung 140 des ersten Gehäuseteils 40 außer dem Endanschlag bzw. Vorsprung 113 mehrere Rastaufnahmen 141 vorgesehen, wie in Figur 5 und 9 zu sehen zwei Rastaufnahmen 141, die z.B. in Form von Nuten oder Kerben ausgebildet sind, in denen das zumindest eine vorkragende Element 112 verrasten kann. Mit gestrichelten Linien ist in Figur 5 eine in einer der beiden Rastaufnahmen 141 verrastete Position des zweiten Gehäuseteils 41 angedeutet. Die gegenüber dem Verrasten an dem Vorsprung 113 höhere bzw. nähere Position der Linse 2 gegenüber dem Lichtsensor 6 kann somit der Figur 5 entnommen werden. Bei Vorsehen mehrerer Rastaufnahmen 141 können diese entlang der Längserstreckung des ersten Gehäuseteils 40 voneinander in regelmäßigen oder unregelmäßigen Abständen beabstandet vorgesehen sein, so dass das vorspringende Element 112 in mehreren Positionen bzw. Ebenen darin verrasten kann. Dies bietet den Vorteil, dass die Lichterfassungseinheit genau an eine jeweils gewünschte Montagehöhe H der Lichterfassungseinheit in einem Raum angepasst werden kann (siehe Figur 9). Eine Lichtmessung erfolgt, wie in Figur 9 angedeutet, auf dem Boden 201 eines Raums 200 und/oder in einer vorgebbaren Höhe im Raum 200, sofern die dort herrschenden Lichtverhältnisse von Interesse sind, wobei die Lichterfassungseinheit 1 an der Decke 202 des Raums 200 angeordnet ist. Durch Bündelung des von der Linse 2 gesammelten Lichts (in Figur 9 links angedeutet durch Lichtstrahlen 22) trifft stets eine solche Menge an Licht auf den Lichtsensor 6 auf, dass eine Konstantlichtregelung auch in Höhen von mehr als 5 m, insbesondere 16 m, ermöglicht wird durch die Möglichkeit eines Verstellens des Abstands zwischen Linse 2 und Lichtsensor 6.

Anstelle des Vorsehens von ein oder mehreren Rastaufnahmen 141 zum Verrasten des zumindest einen vorspringenden Elements 112 des zweiten Gehäuseteils 41 entlang der Innenseite des ersten Gehäuseteils 40 kann auch eine stufenlose Verstellung des zweiten Gehäuseteils 41 gegenüber dem ersten Gehäuseteil 40 erfolgen. Hierzu kann zumindest eine Einstelleinrichtung zum stufenlosen Einstellen des Abstands der Linse 2 gegenüber dem Lichtsensor 6 vorgesehen sein. Z.B. kann bei Vorsehen zumindest eines elektromotorischen Antriebs für das Bewegen des zweiten Gehäuseteils 41 ein stufenloses Verstellen und Einstellen der Position des zweiten Gehäuseteils 41 gegenüber dem ersten Gehäuseteil 40 erfolgen. Ferner ist es möglich, eine kabelgebundene oder kabellose Fernsteuerung vorzusehen, über die ein Verstellen der Position des zweiten Gehäuseteils 41 gegenüber dem ersten Gehäuseteil 40 von einer von der Lichterfassungseinheit 1 entfernten Stelle möglich ist. Hierdurch kann beispielsweise von einer Position am Boden 201 eines Raums 200 oder von einer gewünschten Höhe in einem Raum oder von einer weiter entfernten Stelle aus, ein gezieltes Einstellen der Lichterfassungseinheit vorgenommen werden. Die Linse 2 wird vermittels Ansteuerung durch eine Fernsteuerungseinrichtung in eine gewünschte bzw. geeignete Position verfahren. Eine solche Ansteuerung kann vor Ort über eine Fernsteuerungseinrichtung erfolgen und/oder über ein Bussystem von einer entfernten Stelle aus.

Wie den Figuren 1 bis 5 und 9 weiter entnommen werden kann, weist der erste Gehäuseteil 40 zum Verbinden der Lichterfassungseinheit 1 mit dem Präsenzmelder 5 oder einer anderen Auswertungseinheit die seitliche Verlängerung 43 auf. Ein Anschlusskabel 21 zum Verbinden des Lichtsensors 6 mit einer solchen Auswertungseinheit insbesondere des Präsenzmelders 5 ist im ersten Gehäuseteil 40 und durch dessen seitliche Verlängerung 43 hindurch angeordnet (siehe Figur 5 und Figur 9). Durch die seitliche Verlängerung 43 kann ferner ein Bus hindurchgeführt werden, wenn die Lichterfassungseinheit 1 an einen solchen zur Datenübermittlung an eine externe Auswertungseinheit angeschlossen werden soll (nicht dargestellt).

Die seitliche Verlängerung 43 und der obere Teil 42 können fest mit dem ersten Gehäuseteil 40 verbunden oder mit diesem einteilig oder vom ersten Gehäuseteil 40 abnehmbar ausgebildet sein. Bei letzterer Ausgestaltung können, wie in Figur 2 dargestellt, Einlegescheiben 10a, 10b, 10c in einer beliebigen und veränderlichen Anzahl in den ersten Gehäuseteil 40 eingesetzt werden. Alle Einlegescheiben 10a, 10b, 10c weisen jeweils eine Aussparung bzw. innere Durchgangsöffnung 100 auf, wobei die Durchgangsöffnungen 100 der Einlegescheiben 10a, 10b, 10c übereinander fluchtend angeordnet sind. Der Lichtsensor 6 ist in die Einlegescheibe 10a sowie die Durchgangsöffnung 90 in dem Zwischenboden 9 eingesetzt angeordnet. Die zueinander fluchtend angeordneten Durchgangsöffnungen 100 der Einlegescheiben 10a, 10b, 10c bilden eine Art Tunnel vor dem Lichtsensor 6, wobei die Länge des Tunnels variabel und durch die Anzahl der übereinander angeordneten Einlegescheiben und deren Dicke veränderlich bzw. variabel ist, also u.a. von der Anzahl der übereinander angeordneten Einlegescheiben 10a, 10b, 10c abhängt. Durch den gebildeten Tunnel wird der Einfall von (seitlichem) Streulicht auf den Lichtsensor 6 verhindert. Als Alternative zu den Einlegescheiben 10a, 10b, 10c kann auch z.B. ein Röhrchen verwendet werden, wobei auch dieses in unterschiedlichen Längen ausgebildet und vor dem Lichtsensor 6 zum Verhindern eines Einfalls von (seitlichem) Streulicht auf diesen angeordnet werden kann.

Bei der in den Figuren 6 bis 8 und teilweise Figur 9 gezeigten Ausführungsform ist die Lichterfassungseinheit 1 nicht außenseitig an dem Präsenzmelder 5 bzw. dessen Gehäuse 50 angeordnet, sondern in dieses integriert. Der Lichtsensor 6 ist dabei auf der Platine 51 des Präsenzmelders 5 angeordnet. Ein Vorsehen eines Anschlusskabels zum Anschließen der Lichterfassungseinheit 1 an eine proximale oder distale Auswertungseinheit kann dadurch entfallen. Vielmehr ist der Lichtsensor 6 über die Platine 51 direkt an die Auswertungseinheit des Präsenzmelders 5 angeschlossen.

Wie insbesondere den Figuren 6 bis 8 und 9 weiter zu entnehmen ist, ist die Lichterfassungseinheit 1 neben einer Linse 52 des Präsenzmelders 5 angeordnet, welche Linse 52 vor oder über zumindest einem Sensor 53 zur Bewegungserfassung, wie einem PIR-Sensor, angeordnet ist. Die Linse 52 weist eine wabenartige Struktur auf und besteht insbesondere aus einem transparenten, lichtdurchlässigen, jedoch diffusen Material, wie Figur 9 zu entnehmen ist. Die Linse 52 ist im Vergleich zu einer kuppelförmigen Linse 54 gemäß Figur 3 und 4, die ebenfalls zum Abdecken zumindest eines Sensors zur Bewegungserfassung dient, länglich schmal ausgebildet, so dass neben dieser Platz zum Anordnen der Lichterfassungseinheit 1 bzw. insbesondere von deren Linse 2 verbleibt. Grundsätzlich ist es ebenfalls möglich, in der Linse 52 eine Aussparung, Ausnehmung oder Öffnung vorzusehen, in die die Lichterfassungseinheit 1 aufgenommen wird, so dass die Linse 2 ebenfalls nicht unterhalb, sondern außerhalb der Linse 52 angeordnet ist und ein Bündeln von Licht in Richtung des Lichtsensors 6 ermöglicht wird. Die Linse 52 kann in diesem Falle kuppelförmig oder anderweitig geformt, z.B. länglich schmal, wie in den Figuren 6 bis 8 gezeigt, ausgebildet sein.

Auch bei der Integration der Lichterfassungseinheit 1 in das Gehäuse 50 des Präsenzmelders 5 kann die Linse 2 gegenüber dem Gehäuse 50 des Präsenzmelders 5 bzw. der Position des Lichtsensors 6 auf der Platine 51 des Präsentmelders 5 verstellt werden durch insbesondere Bewegen, wie Teleskopieren, des die Linse 2 umfassenden zweiten Gehäuseteils 41 gegenüber dem Gehäuse 50 des Präsenzmelders 5. Das Gehäuse 50 des Präsenzmelders 5 kann hierzu höher ausgebildet sein als das Gehäuse 50 des Präsenzmelders 5 gemäß Figur 3 und 4, bei dem die Lichterfassungseinheit 1 außenseitig an diesem angeordnet ist. Hierdurch wird eine ausreichende Höhe zum Verfahren des zweiten Gehäuseteils 41 gegenüber dem Gehäuse 50 des Präsenzmelders 5 bzw. dessen Platine 51 geschaffen.

Zum Verrasten des zweiten Gehäuseteils 41 in unterschiedlichen Positionen innerhalb des Gehäuses 50 sind ebenfalls Rastaufnahmen 55 vorgesehen, hinter denen das zumindest eine vorkragende Element 112 des zweiten Gehäuseteils 41 verrasten kann, um in unterschiedlichen Positionen angeordnet werden zu können, somit eine Anpassung der Position der Linse 2 gegenüber dem Lichtsensor 6 an unterschiedliche Montagehöhen der Lichterfassungseinheit 1 bzw. des Präsenzmelders 5 in einem Raum 200 zu ermöglichen. Anstelle des Vorsehens von Rastaufnahmen 55 kann wiederum, wie bei der Ausführungsvariante mit der außenseitig angeordneten Lichterfassungseinheit 1, eine stufenlose Verstellung beispielsweise durch Vorsehen einer elektromotorischen Verstellung des zweiten Gehäuseteils 41 mit der Linse 2 gegenüber der Platine 51 im Gehäuse 50 des Präsenzmelders 5 vorgesehen sein/werden. Um ein verkantungsfreies Bewegen des zweiten Gehäuseteils 41 gegenüber dem Gehäuse 50 des Präsenzmelders 5 zu ermöglichen, kann ebenfalls eine radiale und/oder axiale Führung für den die Linse 2 umfassenden zweiten Gehäuseteil 41 innerhalb des Gehäuses 50 des Präsenzmelders 5 vorgesehen sein.

Die in den Figuren 6 bis 8 und links in Figur 9 gezeigte Ausführungsvariante des Präsenzmelders 5 mit in dessen Gehäuse 50 integrierter Lichterfassungseinheit 1 ist kompakter als die in den Figuren 3 und 4 und rechts in Figur 9 gezeigte mit der außenseitig an dem Gehäuse 50 des Präsenzmelders 5 angeordneten Lichterfassungseinheit 1. Ein Herausbewegen des die Linse 2 umfassenden zweiten Gehäuseteils 41 aus dem ersten Gehäuseteil 40 der Lichterfassungseinheit 1 bzw. dem Gehäuse 50 des Präsenzmelders 5 ist manuell insbesondere durch eine Zug- und/oder Drehbewegung bzw. ein Hineinbewegen von diesem in den ersten Gehäuseteil 40 bzw. das Gehäuse 50 durch eine drückende und/oder drehende Bewegung möglich. Bei Vorsehen einer elektrischen Ansteuerung kann das Herausbewegen und Hineinbewegen des zweiten Gehäuseteils 41 aus/in den ersten Gehäuseteil 40 der Lichterfassungseinheit 1 bzw. das Gehäuse 50 des Präsenzmelders 5 auch mit Abstand zu der Lichterfassungseinheit 1, insbesondere über eine Fernsteuerungseinrichtung und/oder über ein Bussystem, erfolgen.

Unabhängig davon, ob die Lichterfassungseinheit 1 in den Präsenzmelder 5 bzw. dessen Gehäuse 50 integriert oder außenseitig an diesem angeordnet ist, kann somit eine Lichterfassung bei Anordnung in großen Raumhöhen und hierdurch eine Konstantlichtregelung erfolgen, wobei der Lichtsensor 6 und die diesem zugeordnete Linse 2 über 5 m, insbesondere 10 bis 16 m, von der Stelle entfernt sind, in der die vorhandene Lichtmenge erfasst werden soll.

Neben den im Vorstehenden beschriebenen und in den Figuren gezeigten Ausführungsvarianten einer Lichterfassungseinheit zur Lichterfassung für eine Konstantlichtregelung für zumindest einen Präsenzmelder können noch zahlreiche weitere vorgesehen werden, auch beliebige Kombinationen der genannten Merkmale von dieser; wobei die Lichterfassungseinheit zumindest einen Lichtsensor zum Messen der Umgebungshelligkeit, zumindest eine Linse zum Bündeln von einfallenden Lichtstrahlen in Richtung des Lichtsensors und zumindest einen ersten Gehäuseteil zum Anordnen des zumindest einen Lichtsensors umfasst, wobei der erste Gehäuseteil ein feststehender Gehäuseteil der außerhalb des Präsenzmelders angeordneten Lichterfassungseinheit oder das Gehäuse des Präsenzmelders sein kann, in dem die Lichterfassungseinheit angeordnet ist, und wobei die zumindest eine Linse in einem zweiten Gehäuseteil angeordnet ist und eine Einrichtung zum Verändern der Brennweite vorgesehen ist zum Anpassen der Lichterfassungseinrichtung an deren Montagehöhe in einem Raum, insbesondere durch Bewegen des zweiten Gehäuseteils gegenüber dem feststehenden ersten Gehäuseteil.

### Bezugszeichenliste

- 1: Lichterfassungseinheit
- 2: Linse
- 4: Gehäuse
- 5: Präsenzmelder
- 6: Lichtsensor
- 8: Auflagefläche für Linse 2
- 9: Zwischenboden zur Abtrennung von 42
- 10a: Einlegescheibe
- 10b: Einlegescheibe
- 10c: Einlegescheibe
- 11: Teleskopeinrichtung
- 20: konvexer Teil von 2
- 21: Anschlusskabel
- 22: Lichtstrahl
- 40: erster Gehäuseteil
- 41: zweiter Gehäuseteil
- 42: oberer Teil des ersten Gehäuseteils 40
- 43: seitliche Verlängerung des oberen Teils 42 des ersten Gehäuseteils 40
- 50.: Gehäuse
- 51: Platine
- 52: Linse
- 53: Sensor zur Bewegungserfassung
- 54: Linse
- 55: Rastaufnahme
- 90: Durchgangsöffnung in 9
- 100: Durchgangsöffnung.
- 110: Ringelement
- 112: auskragendes Element
- 113: (erster) Vorsprung
- 114: zweiter Vorsprung
- 140: Wandung
- 141: Rastaufnahme
- 200: Raum
- 201: Boden
- 202: Decke
- H: Montagehöhe
- P1: Pfeil (Höhenverstellbarkeit)

## Patentansprüche

1. Lichterfassungseinheit (1) zur Lichterfassung für eine Konstantlichtregelung für zumindest einen Präsenzmelder (5), wobei die Lichterfassungseinheit (1) zumindest einen Lichtsensor (6) zum Messen der Umgebungshelligkeit, zumindest eine Linse (2) zum Bündeln von einfallenden Lichtstrahlen in Richtung des Lichtsensors (6) und zumindest einen feststehenden ersten Gehäuseteil (40,50) zum Anordnen des zumindest einen Lichtsensors (6) umfasst,
**dadurch gekennzeichnet, dass**
die zumindest eine Linse (2) in einem zweiten Gehäuseteil (41) angeordnet ist und eine Einrichtung zum Verändern der Brennweite vorgesehen ist zum Anpassen der Lichterfassungseinrichtung (1) an deren Montagehöhe in einem Raum.

2. Lichterfassungseinheit (1) nach Anspruch 1,
**dadurch gekennzeichnet, dass**
die Einrichtung zum Verändern der Brennweite zumindest zwei beabstandete Auflageflächen (8) für die Linse (2) innerhalb des zweiten Gehäuseteils (41) umfasst.

3. Lichterfassungseinheit (1) nach Anspruch 1 oder 2,
**dadurch gekennzeichnet, dass**
die Einrichtung zum Verändern der Brennweite eine Teleskopeinrichtung (11) ist, wodurch der Abstand der zumindest einen Linse (2) gegenüber dem den zumindest einen Lichtsensor (6) umfassenden feststehenden ersten Gehäuseteil (40,50) veränderbar ist.

4. Lichterfassungseinheit (1) nach Anspruch 3,
**dadurch gekennzeichnet, dass**
die Teleskopeinrichtung einen die zumindest eine Linse (2) aufnehmenden Teil (41) umfasst, der endseitig mit zumindest einer Rasteinrichtung, insbesondere einem auskragenden Element (112), versehen ist, und den feststehenden Gehäuseteil (40,50) mit zumindest zwei in seiner Längsrichtung beabstandeten Rastaufnahmen (141), wobei das zumindest eine auskragende Element (112) in den Rastaufnahmen (141) verrastbar ist.

5. Lichterfassungseinheit (1) nach Anspruch 3,
**dadurch gekennzeichnet, dass**
die Teleskopeinrichtung zumindest eine Einstelleinrichtung zum stufenlosen Einstellen des Abstands der zumindest einen Linse (2) gegenüber dem zumindest einen Lichtsensor (6) aufweist.

6. Lichterfassungseinheit (1) nach einem der Ansprüche 1, 3 oder 5,
**dadurch gekennzeichnet, dass**
die Einrichtung zum Verändern der Brennweite eine Schraubverbindung zwischen dem die zumindest eine Linse (2) umfassenden zweiten Gehäuseteils (41) und dem feststehenden ersten Gehäuseteil (40) umfasst.

7. Lichterfassungseinheit (1) nach einem der vorstehenden Ansprüche,
**dadurch gekennzeichnet, dass**
der feststehende erste Gehäuseteil (40) mit zumindest einer Einrichtung (43) zum Verbinden der Lichterfassungseinheit (1) mit einem Präsenzmelder (5) versehen ist.

8. Präsenzmelder (5) mit zumindest einer Lichterfassungseinheit (1) nach einem der vorstehenden Ansprüche, wobei der Präsenzmelder (5) mit zumindest einem Gehäuse (50) versehen ist,
**dadurch gekennzeichnet, dass**
die Lichterfassungseinheit (1) außenseitig an dem Gehäuse (50) des Präsenzmelders (5) anordbar oder angeordnet ist und der zumindest eine Lichtsensor (6) der Lichterfassungseinheit (1) mit dem Präsenzmelder (5) und/oder einem Bussystem signalverbindbar oder signalverbunden ist.

9. Präsenzmelder (5) mit zumindest einer Lichterfassungseinheit (1) nach einem der Ansprüche 1 bis 7, wobei der Präsenzmelder (5) mit zumindest einem Gehäuse (50) versehen ist,
**dadurch gekennzeichnet, dass**
die Lichterfassungseinheit (1) in das Gehäuse (50) des Präsenzmelders (5) integriert ist, wobei der zumindest eine Lichtsensor (6) im Innern des Präsenzmelders (5) angeordnet oder anordnbar und mit dem Präsenzmelder (5) und/oder einem Bussystem signalverbindbar oder signalverbunden ist.

10. Präsenzmelder (5) nach Anspruch 9,
**dadurch gekennzeichnet, dass**
der zumindest eine Lichtsensor (6) auf einer Platine (51) des Präsenzmelders (5) angeordnet ist.

11. Präsenzmelder (5) nach Anspruch 9 oder 10,
**dadurch gekennzeichnet, dass**
die Linse (2) der Lichterfassungseinheit (1) außerhalb einer einen Bewegungssensor, insbesondere einen PIR-Sensor, überdeckenden Linse (52) angeordnet ist.

12. Präsenzmelder (5) nach einem der Ansprüche 9 bis 11,
**dadurch gekennzeichnet, dass**
innerhalb des Gehäuses (50) des Präsenzmelders (5) zumindest eine Rastaufnahme (55) zum Zusammenwirken mit zumindest einem auskragenden Element (112) zum Verrasten der Position der zumindest einen Linse (2) der Lichterfassungseinheit (1) gegenüber dem zumindest einen innerhalb des Gehäuses (50) des Präsenzmelders (5) angeordneten Lichtsensor (6) der Lichterfassungseinheit (1) vorgesehen ist.

13. Präsenzmelder (5) nach einem der Ansprüche 8 bis 12,
**dadurch gekennzeichnet, dass**
zumindest eine Führungseinrichtung (113,114) vorgesehen ist zum Führen der Bewegung des die zumindest eine Linse (2) umfassenden zweiten Gehäuseteils (41) der Lichterfassungseinheit (1) beim Verändern des Abstands der zumindest einen Linse (2) gegenüber dem zumindest einen Lichtsensor (6).

14. Präsenzmelder (5) nach einem der vorstehenden Ansprüche 8 bis 13,
**dadurch gekennzeichnet, dass**
zumindest eine Auswertungseinheit zum Auswerten der von dem zumindest einen Lichtsensor (6) der Lichterfassungseinheit (1) erfassten Daten vorgesehen und der zumindest eine Lichtsensor (6) mit der Auswertungseinheit signalverbindbar oder signalverbunden ist.

15. Präsenzmelder nach Anspruch 14,
**dadurch gekennzeichnet, dass**
die zumindest eine Auswertungseinheit innerhalb des Präsenzmelders (5) angeordnet ist oder dass die zumindest eine Auswertungseinheit über zumindest ein Bussystem mit dem Präsenzmelder (5) und/oder dem zumindest einen Lichtsensor (6) der Lichterfassungseinheit (1) signalverbindbar oder signalverbunden ist.
